# EUROPEAN PATENT APPLICATION

(11) **EP 4 722 131 A1**
(43) Date of publication of application: **08.04.2026**
(21) Application number: 24214939.1
(22) Date of filing: 22.11.2024
(51) Int. Cl.: B65G 1/04

(54) **CONTAINER-HANDLING VEHICLE**

(30) Priority: 07.10.2024 US 202463704244 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a gripping device for a robotic container-handling vehicle, comprising one or more gripping elements configured to engage a container and a heating system capable of supplying heat to the one or more gripping elements.

## Description

### TECHNICAL FIELD

The disclosure relates to robotic container-handling vehicles. More particularly, the disclosure relates to the gripping elements of robotic container-handling vehicles and systems for controlling the temperature of the gripping elements.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked, and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Recent developments in automated storage and retrieval systems have involved implementing sub-zero environments for the storage of frozen goods, such as frozen food items. At the top of the grid, where the robotic container handling-vehicles travel along the rail system, the temperature may be above zero in order to facilitate the smooth functioning of the robotic vehicles. However, within the grid itself where the containers are stored the temperature may be considerably below zero degrees Celsius, for example as low as around -28 degrees Celsius.

Conventional robotic container-handling vehicles employ a lifting device configured to lower and raise a gripping device into a grid. The gripping device may be lowered by the lifting device into the grid to retrieve or deposit a container, after which the gripping device is then raised (after collecting or depositing a container) out of the grid, allowing the vehicle to travel along the rail system to a destination. Therefore, in the context of sub-zero environments at which the containers are stored within the grid at a temperature below zero degrees Celsius, the gripping device is subjected to a large temperature range between the top of the grid and within the grid itself, as the gripping device is lowered into and raised out of the grid. The required range of temperatures at which the gripping device must be configured to operate may therefore be greater than that for refrigerated solutions, whereby the grid and rail system may be at similar or substantially the same temperatures. As a result, in order for the gripping devices to function effectively in sub-zero environments, one or more modifications may have to be made.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a perspective side view of a robot according to some embodiments of the present disclosure;
Fig. 5b shows a side view of a robot according to some embodiments of the present disclosure;
Fig. 6 shows a gripping device according to some embodiments of the present disclosure;
Fig. 7 shows a side view of a robot according to some embodiments of the present disclosure;
Fig. 8a shows a side view of a robot according to some embodiments of the present disclosure;
Fig. 8b shows a side view of a robot according to some embodiments of the present disclosure;
Fig. 9 shows a flowchart for a method according to some embodiments of the present disclosure; and
Fig. 10 shows a side view of a robot according to some embodiments of the present disclosure.

### DETAILED DESCRIPTION

In overview, the disclosure relates to robotic container-handling vehicles (robots), and gripping devices thereof, that are capable of being heated by an in-built heating system. In more detail, a gripping device for a robotic container-handling vehicle is disclosed that includes one or more gripping elements for engaging (i.e., gripping) a storage container (e.g., located within the grid of an automated storage and retrieval system. The gripping device or the robot more generally includes a heating system, otherwise known as a heat supply system. The heating system may be configured to generate heat and supply said heat to the gripping device, or may otherwise be configured to supply (i.e., direct) heat generated elsewhere (outside of the heating system itself) to the gripping device. The heating system may be built into the gripping device and/or the main body of the robot and is capable of supplying heat to the gripping elements of the gripping device during regular operation (i.e., as the robots are transporting containers in an automated storage and retrieval system) or during charging (i.e., when the robots are docked at a charging station).

The provision of a heating system capable of supplying heat to the gripping elements addresses issues relating to operating in a sub-zero environment. In particular, as the gripping device is lowered into the grid to deposit or collect a container, the gripping device is subjected to temperatures below zero degrees Celsius (whilst the rest of the robot, including its main body remains above the grid in a relatively warmer environment). In such sub-zero environments, the moving elements, in particular the components of the actuation mechanism for each gripping element, are susceptible to freezing and seizing up (for example, due to moisture in the air condensing and freezing on the surface of those components), which either reduces the effectiveness of the robot's ability to engage with and transport containers, or altogether prevents the robot from gripping the containers. A heating system capable of supplying heat to the gripping elements therefore mitigates the problem of the gripping elements freezing in the sub-zero environment inside the grid. In particular, the heating system can either pre-warm the gripping elements before the gripping device is lowered into the grid, or the heating system can continually supply heat during operation of the gripping device.

In some embodiments, the heating system leverages heat generated elsewhere outside of the heating system (e.g., elsewhere in the robot) and directs this heat towards the gripping device. For example, one or more electrical components of the robot, such as the power source, motors, and electronic circuits, may heat up during operation of the robot or during charging. In particular, the power source (batteries housed within the robot) may experience a considerable increase in temperature during charging. In such embodiments, the heating system may include one or more fans configured to direct air from those electrical components towards the gripping device. The heating system may further comprise ducts along which the fans direct the air towards the gripping device. Such embodiments may be particularly energy efficient since the heating system isn't required to generate the requisite heat itself but instead is configured to direct heat generated elsewhere in the robot (as a by-product of the normal operation or charging of the robot) towards the gripping elements.

In general, the present disclosure is directed to embodiments wherein the gripping elements of a gripping device of a robotic container-handling vehicle are warmed by supplying the gripping elements with heat from a dedicated heat source (such as a heating element) or from other heated components of the robot (such as the power source). The gripping elements may be continually warmed even as the gripping device is lowered into a grid, or the gripping elements may be warmed prior to and/or after lowering the gripping device into the grid, i.e., when the gripping device is in a retracted position. The heating system may be supplied with power from the onboard power source, or from an external power source such as a charging station. Methods of operating the heating system to supply heat to the gripping elements of the gripping device are also disclosed.

### Automated storage and retrieval system overview

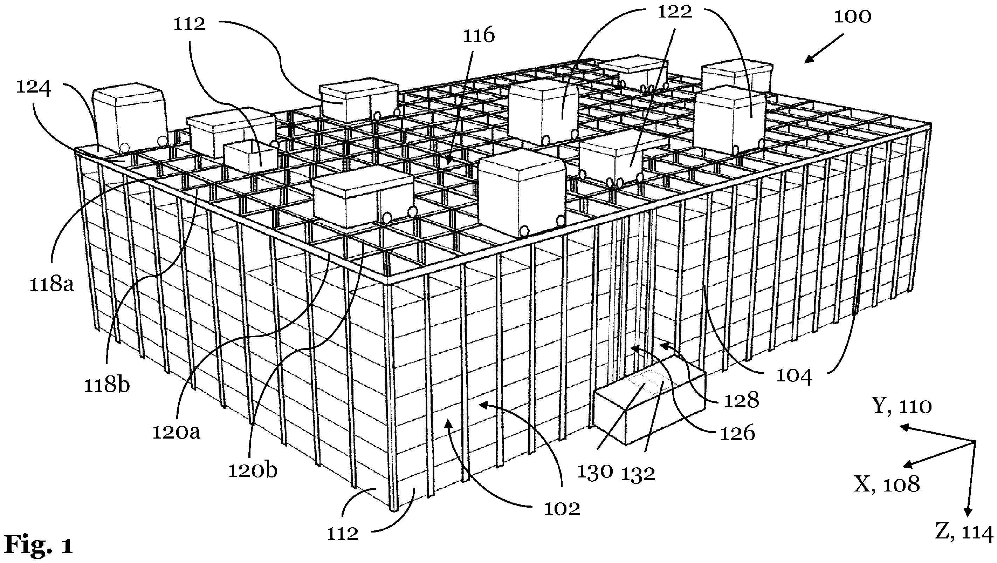

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

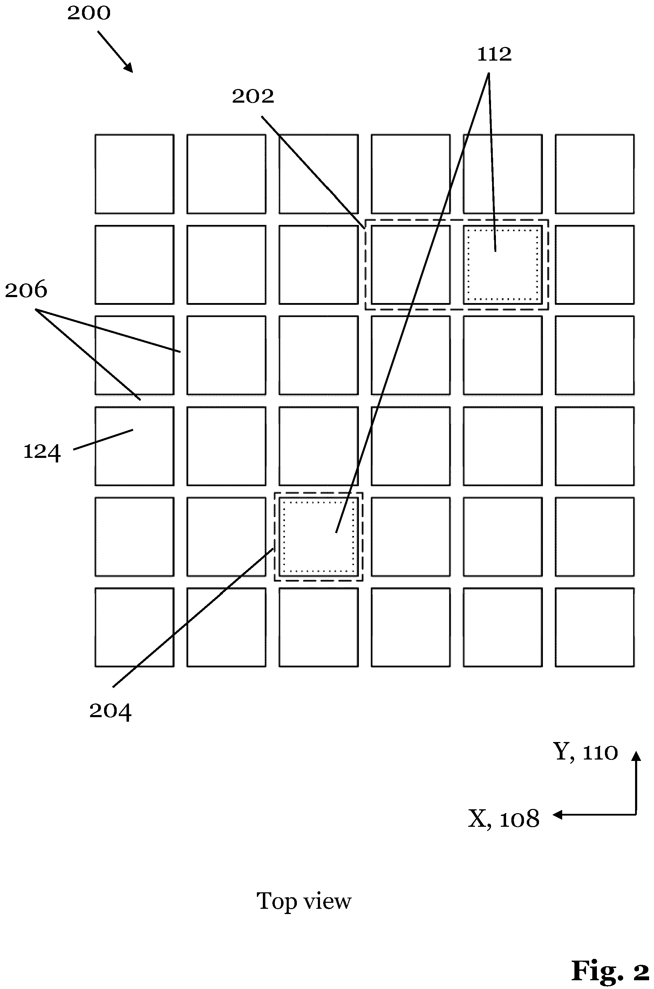

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

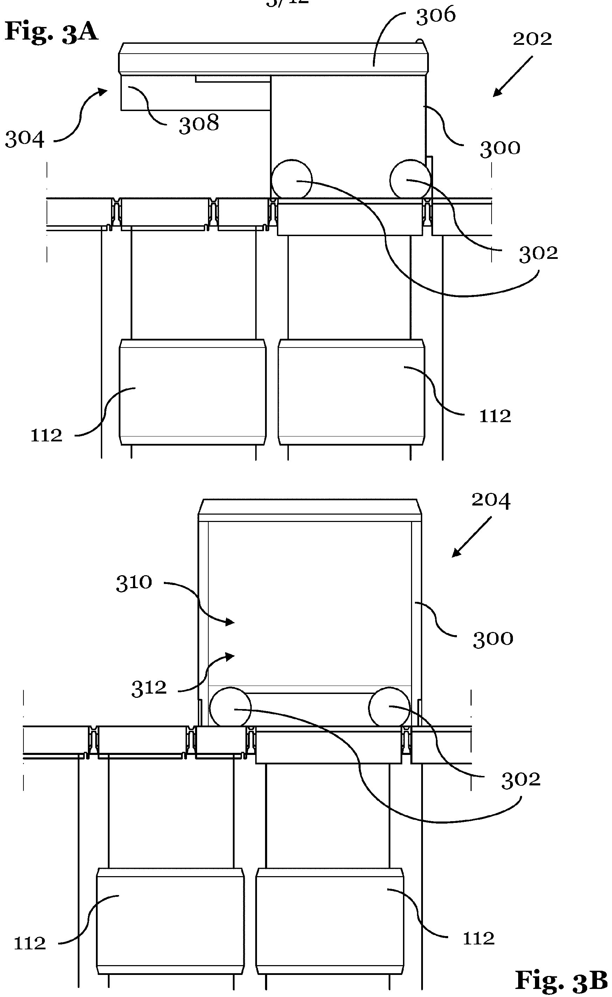

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

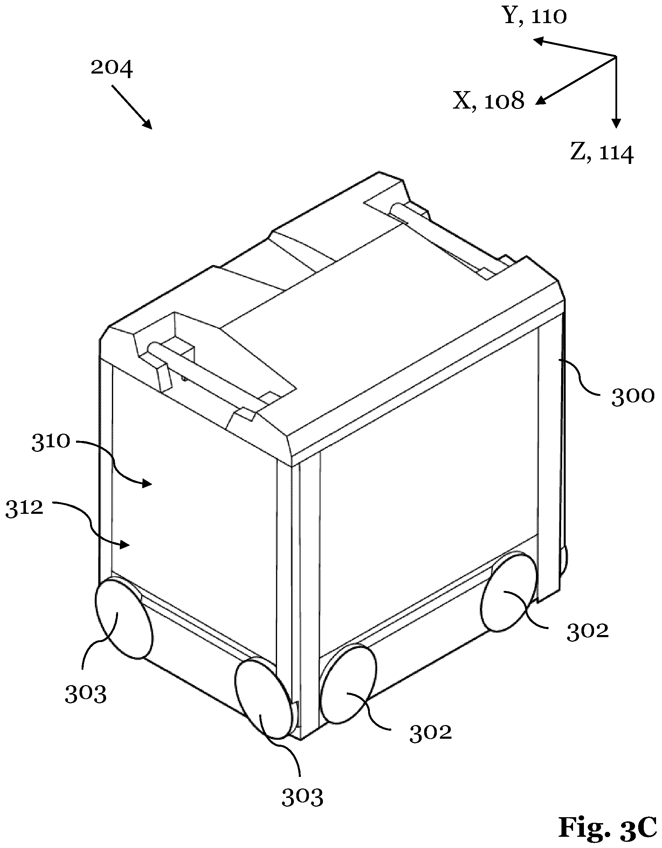

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

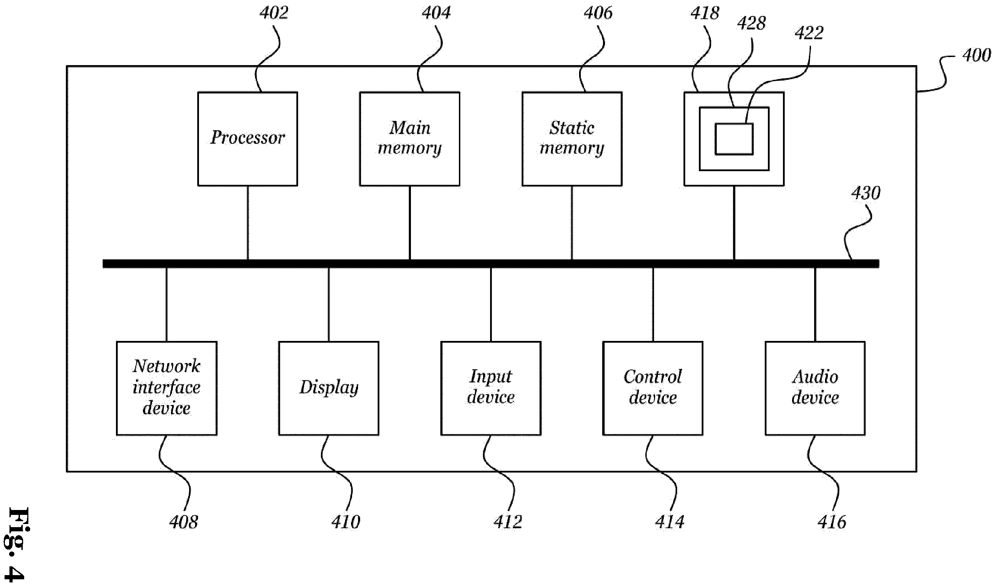

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port columns 126, 128, gripped and lifted by a robot 202, 204 and delivered to the desired storage cell, bins above the desired position being repositioned, if necessary, as discussed above.

### Description of specific improvements

### Gripping devices

The following describes gripping devices and robotic container-handling vehicles (robots) comprising gripping devices according to the present disclosure. In particular, the following embodiments relate to gripping devices or robots comprising gripping devices which further comprise a heating system capable of supplying heat to the gripping device, so that the gripping devices can effectively operate in sub-zero environments.

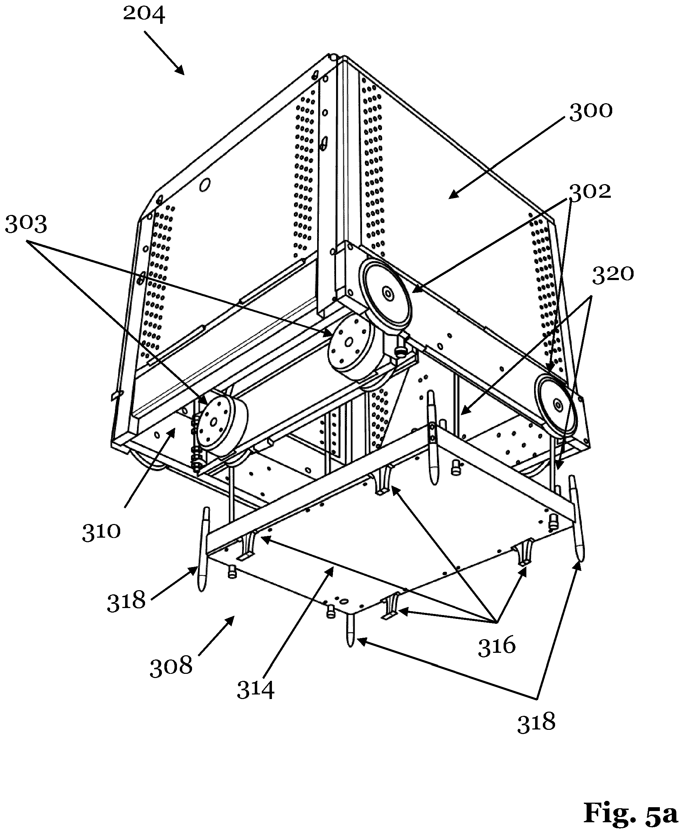

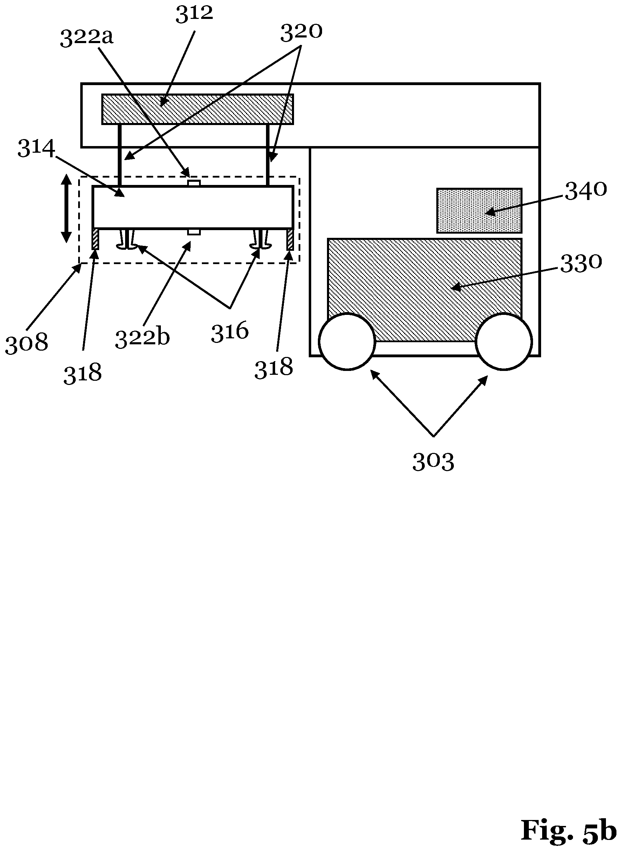

Referring to Figs. 5a and 5b, two views of two different types of robots according to embodiments of the present disclosure are shown. In particular, Fig. 5a provides a perspective view of an internal cavity-type robot 204 (similar or identical to the robot illustrated in Figs. 3B and 3C) and Fig. 5b provides a side view of a cantilever-type robot (similar or identical to the robot illustrated in Fig. 3A). The person skilled in the art would recognise that following description, and embodiments of the present disclosure in general, may apply to both internal cavity-type robots and cantilever-type robots. In addition, embodiments of the present disclosure may extend to robots of other form factors that are suitable for use with an automated storage and retrieval system for the transport of containers stored therein.

With reference to Fig. 5A, the exemplary robot 204 comprises a body 300 defining an internal cavity 310 housing a lifting device 312 (not shown in the figure). The lifting device 312 supports a gripping device 308 via a suspension means 320. The suspension means 320 may be one or more cables, cords, ropes, or the like, that are fixed to the gripping device 308 at one end and are configured to be wound round a system of pulleys at the other end. In more detail, the lifting device 312 may comprise a system of pulleys driven by one or more motors that are configured to lower or raise the gripping device by unwinding or winding up the suspension means 320 using the system of pulleys. In more detail, the lifting device is configured to lower the gripping device 308 out of the internal cavity 310 and optionally into a grid (e.g., grid 100) of an automated storage and retrieval system. The lifting device is further configured to raise the gripping device 308 when it ss in a lowered position, i.e., deployed position, into a retracted position within the cavity 310.

As described above in relation to Figs. 3A - 3C, the robot 204 may further comprise a plurality of wheels arranged in perpendicular sets 302, 303, to allow travel of the robot in the X and Y directions on the rail system 116 arranged on top of a grid 100. The wheels may be driven by one or more motors housed within the robot 204 (not shown). In addition, the robot 204 further comprises one or more power sources 330 (not shown in Fig. 5A) housed within the body 300 that are configured to supply power to the various components of the robot, such as to motors driving the wheels 302, 303 or the pulleys of the lifting device 312, the gripping device 308, and to any other on-board components that require electrical power. The power sources may comprise rechargeable batteries and circuitry configured to pass current the batteries when the robot is docked at a charging station.

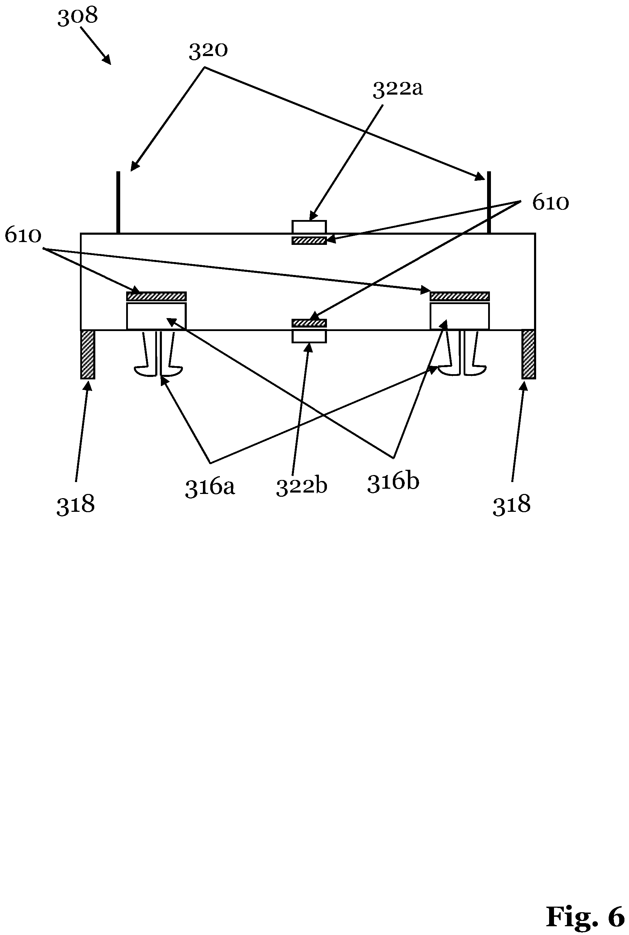

The robot 204 further comprises a heating system configured to supply heat to the gripping device and in particular to one or more components of the gripping device. The components of the gripping device and the structure and operation of the heating system are described in more detail below with reference to Figs. 6, 7, 8a and 8b. and are not shown in Figs. 5A or 5B. As described in more detail below, the onboard power source 330 may be configured to supply electrical power to components of the heating system such that the heating system is capable of supplying heat to the gripping device. Additionally, or alternatively, the heating system is configured to be electrically connected to an external power source, such as when the robot is docked at the charging station. In more detail, the heating system may comprise one or more electrical contacts that are connectable to an external power source, such as a charging station.

The robot further comprises one or more controllers 340 (not shown in Fig. 5A) configured to control any one or more of the onboard systems, such as the motors for driving the wheels 302, 303, the lifting device 312, the gripping device 308, the heating system, or any other onboard components. The controller may be configured to send control signals to the onboard components of the robot 204 and may be configured to control the supply of power from the power source to those components. The operation of the controller in relation to the heating system is described in more detail below with reference to Figs. 6, 7, 8a and 8b.

With reference to Fig. 5B, a cross-sectional side-view of a cantilever-type robot 204 according to an embodiment of the present disclosure is shown. In this view, a power source 330 and a controller 340 are shown to be housed within the body 300. Fig. 5B further illustrates a lifting device 312 connected to a gripping device 308 via suspension means 320 (e.g., cables, ropes, wires, or the like). As described above in relation to Fig. 5A, the lifting device 312 is configured to lower and raise the gripping device 308 in a generally vertical direction indicated by the vertical arrow in Fig. 5B. Fig. 5B further illustrates one set of wheels 302, although it would be appreciated that the robot may comprise at least one additional set of wheels aligned orthogonally to the wheels 302, as shown in Fig. 5A.

Referring now to the gripping device 308 of the exemplary robots shown in Figs, 5A and 5B, the gripping device 308 comprises a frame 314 to which the suspension means 320 is coupled, and one or more gripping elements 316 extending from one or more sides of the frame 314. In some embodiments and as shown in Fig. 5A, the gripping device comprises four gripping elements extending from an underside of the frame (as seen in Fig. 5A), however it would be appreciated that gripping devices according to the present disclosure may generally include one or more gripping elements that extend from the same or different sides of the frame 314. For example, in some embodiments, the gripping device 308 may have gripping elements extending from different lateral sides of the frame 314m rather than from an underside of the frame.

The gripping elements 316 are configured to engage a container such that the robot 204 is capable of engaging and lifting the container (for example lifting the container out of a storage column within a grid 100). In more detail, each gripping element may be configured to move between an engaged position in which the gripping element is configured to engage a container, and a disengaged position in which the gripping element does not engage a container. The gripping elements comprise actuation mechanisms that cause the movement between the engaged and disengaged positions and are described in further detail below with reference to Fig. 5C.

Referring back to Figs 5A and 5B, the gripping device 308 may further comprise one or more guiding members 318 mounted to the frame. The guiding members extend in a generally downwards direction to facilitate alignment of the gripping elements 316 with a storage container. In more detail and as described below, the storage containers that the robots 204 are configured to transport comprise engaging portions that correspond in shape, size and position to the gripping elements 316 of the gripping device 318. The gripping elements of the gripping device are configured to engage with the engaging portions of the container such that when the gripping device 308 is raised by the lifting device, the container is lifted out of the storage column in which it is situated. The guiding members 318 facilitate positional alignment of the gripping elements 316 with the corresponding engaging portions of the container. In an example, the gripping device comprises vertical guiding members 318 at each corner of the frame as shown in Fig. 5A. A container stored in an automated storage and retrieval system container may be provided with corresponding vertical recesses located in a top surface of the container. The vertical recesses may be located at the top corners of the container, but more generally the spacing of the recesses in the container matches the spacing of the guiding members on the gripping device frame 318.

In some examples, and as shown in Fig. 5A, the gripping device may further comprise guiding members 318 extending in a generally upwards direction to facilitate positional alignment of the frame inside the internal cavity. The internal cavity may thus comprise corresponding vertical recesses spaced identically to the upwards-pointing guide members.

With reference to Fig. 5B, the gripping device 308 may further comprise one or more sensors 322a, 322b arranged on a top and/or bottom surface of the frame 308. The sensors are connected to a controller for the lifting device and are configured to send a signal to the controller to indicate that the gripping device 308 has engaged a container (when the gripping device is being lowered) or that the gripping device has reached a retracted position (when the gripping device is being raised). In more detail, sensor 322a may comprise a moveable actuator that is actuated (i.e., pushed downwards by a reactive force from a portion of the robot body, housing or lifting device) when the gripping device reaches a retracted position. When the sensor 322a is actuated in this manner, it is configured to sends a signal to the lifting device or to a controller for the lifting device to cause the lifting device 312 to cease raising the gripping device 308. Similarly, sensor 322b may comprise a moveable actuator that is actuated (i.e., pushed upwards by a reactive force from a portion of a container) when the gripping device is lowered through a storage column and engages a container. When sensor 322b is actuated in this manner, it sends a signal to the lifting device or to a controller for the lifting device to cause the lifting device 312 to cease lowering the gripping device 308. The controller may also send a signal to the gripping device to actuate the gripping elements to engage the corresponding engaging portions of the container.

In general, the sensors 322a and 322b involve moving elements, similar to the gripping elements, that are preferably held at a temperature about zero degrees Celsius when operating in sub-zero environments to prevent freezing and seizing of the sensors. As such, embodiments of the present disclosure may be directed to gripping devices that have heating systems capable of supplying heat to the sensors mounted thereon. More generally, any of the disclosed heated systems (discussed below) are capable of supplying heat to one or more portions of the gripping device, including but not limited to the gripping elements and the sensors. Other components of the gripping device are contemplated which may also need to be held at a temperature greater than zero Celsius when operating in a sub-zero environment. As such, embodiments of the present disclosure extend to gripping devices comprising a heating system configured to heat any one or more portions of the gripping device, particularly any moving portions of the gripping device.

### Heating Systems

Various embodiments of gripping devices comprising heating systems used to supply heat to the gripping device will now be described. With reference to Fig. 6, a close-up view of a gripping device 308 according to some embodiments of the present disclosure is illustrated. The gripping device 308 shown in Fig. 6 is substantially similar to the gripping devices shown in Figs. 5A and 5B and may include the features described above and maybe used in conjunction with a cantilever-type robot, and internal-cavity robot, or any other type of robotic container-handling vehicle.

The gripping device 308 according to the embodiment shown in Fig. 6 comprises one or more electrical heating systems located in or on the gripping device frame 314. In some embodiments, the electrical heating system comprises one or more heating elements 610 (i.e., resistive electrical wires that generate heat when electrical current is passed through the wires) as shown in Fig. 6, although it appreciated that any other type of electrical heating system may be used to supply the requisite heat. That is, the electrical heating system may include any suitable means capable of: generating heat from a supply of electrical current; and supplying that heat via conduction, convection, or radiation to one or more components of the gripping device 308.

In the particular embodiment shown, the gripping device comprises a plurality of heating elements 610 each arranged proximate to a respective gripping element 306. The heating elements are arranged close enough to the gripping elements so that heat generated by the heating elements (due to a supply of electrical current) is able to be transmitted (via conduction, convection, or radiation) to the gripping elements in order to prevent the gripping elements from freezing when operating in sub-zero environments. In some examples, the gripping device may optionally comprise additional heating elements arranged proximate to other components, such as sensors 322a and 322b. In general, the heating elements are arranged in or on the gripping device 314 such that heat generated by the heating elements is able to be transferred to any one or more components (such as the gripping elements or sensors) of the gripping device 308. In some examples, the gripping device may include a single heating element extending between each component for which the heating element is intended to supply heat to.

Referring to each gripping element 316 shown in Fig. 6, the gripping elements comprise one or more gripping arms 316a that extend from the underside of the frame 314, and an actuating mechanism 316b located within or on the frame. The actuating mechanism 316b is configured to cause the one or more gripping arms of each element to move between the engaged and disengaged position. In some embodiments, it is primarily the actuating mechanisms 316b of each element that require heating when operating in sub-zero environments. As such, it may be preferable to arrange the heating elements proximate to the actuating mechanisms (as demonstrated in Fig. 6) rather than the gripping arms. In some embodiments, the heating elements may be embedded within a housing for the actuating mechanisms or may be integral to the mechanisms themselves to maximise heat transfer.

Although not shown in Fig. 6, the heating elements 610 are electrically connectable via circuitry to a power source. For example, the heating elements may be permanently electrically connected to the onboard power source 330 of the robot, via cables, or via the suspension means, or via any other suitable connecting means apparent to the skilled person. In such embodiments, current may be continually supplied, or otherwise supplied at any necessary time to the heating elements in order to warm the components of the gripping device. In some examples, the controller 340 may cause current to be supplied to each heating element as the gripping device 308 is lowered into a sub-zero environment to maintain the gripping elements and other components at an operating temperature above zero Celsius. In this way, the components of the gripping device need only be heated when operating in a sub-zero environment, and not when the gripping device is in the retracted position outside of the grid.

In other embodiments, the heating elements may be electrically connected to one or more electrical contacts arranged on the frame 314, which are in turn arranged to contact/engage one or more corresponding electrical contacts arranged on the main body 300 of the robot when the gripping device is in the retracted position. In other words, the heating elements may only be electrically connected to the onboard power source or more generally to circuitry housed within the main body 300 of the robot when the gripping device is in the retracted position. In such embodiments, current is therefore only supplied to the heating elements when in the retracted position, meaning that the heating elements and in turn gripping devices or other components of the gripping may be "pre-warmed" prior to lowering the gripping device into the sub-zero environment within the grid.

In addition to, or as an alternative to the embodiments described above, the heating elements may be connectable to an external power source, such as a robot container-handling vehicle charging station located at the periphery of the rail system of an automated storage and retrieval system. For example, the main body 300 of the robot may comprise one or more electrical contacts arranged to contact/engage with corresponding contacts of a charging station when the robot is docked at the charging station. The electrical contacts of the robot may be connected (e.g., via cables or any other suitable means) to the heating elements of the gripping device such that current is supplied to the heating elements when the robot is docked. Similar to the embodiment described above, in operation, the heating elements may be "pre-warmed" prior to the robot travelling to a target storage column and lowering the gripping device 308 into the sub-zero environment within the grid.

In some embodiments, the gripping device may further comprise one or more temperature sensors integral with, or arranged proximate to, the one or more components that are arranged to be heated by the heating system. For example, the actuating mechanism of each gripping element may comprise a temperature sensor within or near to its housing. Similarly, the sensors 322a and 322b may also comprise temperature sensors. The temperature sensors are communicatively coupled with a controller (e.g., controller 340) housed within the robot main body 300 or within the frame 314 of the gripping device and are configured to send signals indicating a current temperature to the controller. Based on the received signals, the controller may control the supply of electrical current to the heating elements 610. For example, if the temperature sensors indicate that the temperature of a gripping element actuating mechanism has fallen below a threshold value (e.g., zero degrees Celsius), the controller may cause current to be supplied to the heating elements proximate to that gripping element in order to raise the temperature above the threshold value. In general, the temperature sensors may be used in a control feedback loop to control the temperature of one or more components of the gripping device 308. Temperature control may be individually controlled for each component of the gripping device or collectively for all components of the gripping device.

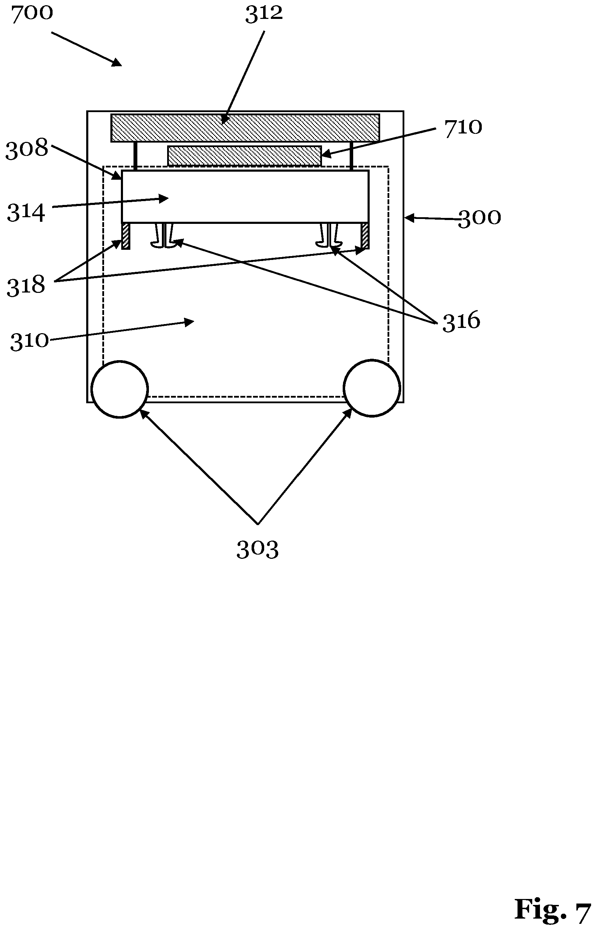

With reference to Fig. 7, a robot 700 comprising a heating system 710 according to an alternative embodiment is illustrated. In particular, Fig. 7 illustrates a side view of internal cavity-type robot that may be substantially similar to the robot illustrated in Fig. 5a described above. In particular, the robot 700 comprises a main body 300 housing a lifting device 308 and an internal cavity 310 housing the gripping device 312 when in a retracted position. The robot may comprise one or more sets of wheels 302, 303. Although not shown in Fig. 7, the robot 700 may comprise an onboard power source (e.g., power source 330), a controller (e.g., controller 340), and any one or more of the other components described above. The gripping device 308 is connected to the lifting device 312 via suspension means 320 as described above and is lowerable out of, and raisable into the internal cavity 310 under action of the lifting device.

In the specific embodiment shown in Fig. 7, the robot 700 further includes a heating system 710 housed within the main body and arranged proximate to the gripping device when the gripping device is in the retracted position (as it is shown in Fig. 7). In other words, the heating system 710 is located in the main body of the robot 700 such that it is capable of supplying heat to one or more components of the gripping device 308 (when the gripping device is in the retracted position). In general, the location of the heating system 710 (or multiple heating systems) within the robot's main body 310 may depend on the location of the components of the gripping device 308 that are to be supplied with heat.

Similar to the heating systems described above in relation to Fig. 6, the heating system 710 maybe any suitable system capable of supplying heat to the gripping device via conduction, convection, or radiation that is apparent to the skilled person. For example, the heating system 710 may comprise one or more heating elements that generate heat in response to current supply (e.g., from an onboard power source or external power source) or may more generally be any electrical heating system that generates heat from a current supply. In a similar manner to the heating elements described above, the heating system may be connected to the onboard power source of the robot 700 (so that the gripping device can be heated during operation of the robot) or maybe configured to connect to an external power source (e.g., via electrical contacts that contact with power supply contacts at a charging station). In addition, the heating system 710 may be communicatively coupled to an onboard controller that controls power supply (e.g., based on a determination that the gripping device is in the retracted position, and/or based on signals from one or more temperature sensors indicating that one or more of the relevant components of the gripping device have fallen below a threshold temperature).

In general, the heating system 710 may be used to "pre-warm" the components (e.g., actuating mechanisms) of the gripping device 308. In embodiments where the heating system is connected to the onboard power source, the controller may be configured to supply power to the heating system 710 when the robot is located above a target storage column, prior to the controller causing the lifting device 312 to lower the gripping device 308 into the storage column. In other embodiments (where the heating system is configured to connect to an external power source), components of the gripping device may be "pre-warmed", for example during a charging period, before the robot travels to a target storage column and lowers the gripping device into the storage column.

In other examples, the heating system 710 includes an induction heating system that includes heating coils mounted in the main body 300 that are configured to heat corresponding portions of the gripping device when the gripping device is in the retracted position. The induction heating coils are configured to connect to an AC power supply, such as an external power source (e.g., when the robot is docked at a charging station). In such embodiments, components of the gripping device may be "pre-warmed" when the robot is stationed at a docking station, prior to the robot traveling to a target storage column and lowering the gripping device into the storage column.

While the heating system 710 has been described above in relation to an internal cavity-type robot, it would be appreciated that the same systems and processes can equally be applied to cantilever-type robots, or any other robotic container-handling vehicles.

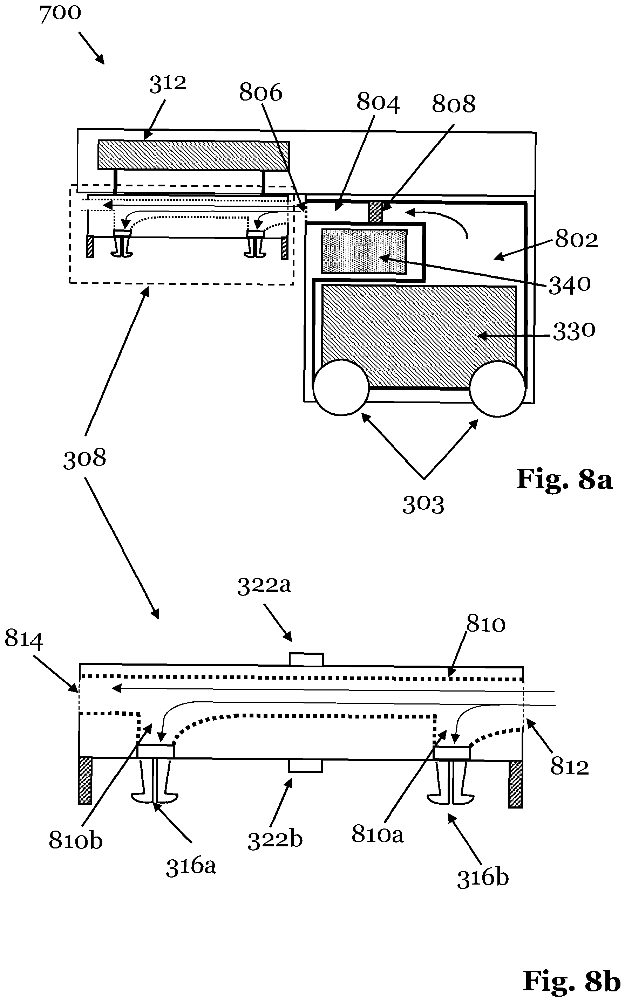

With reference to Fig. 8a, a further embodiment of a heating system for a robotic container-handling vehicle is illustrated. In particular, Fig. 8a illustrates a side view of a cantilever-type robot 800 that may substantially be similar to the robots illustrated in Fig. 5B and Fig. 6 described above. In particular, the robot 800 comprises a main body 300 including a lifting device 312 connected to a gripping device 308 via suspension means 320, and optionally comprises one or more sets of wheels 302, 303. Robot 800 further comprises a power source 330 arranged within a cavity 802 of the main body 300 and optionally further includes a controller 340 arranged in the main body, optionally in the same cavity 802. The cavity 802 is connected to a conduit 804 (also known as a duct) at a first end of the conduit 804. A second end of the conduit 804 is connected to an outlet 806 arranged in a side of the body 300. The conduit is arranged to allow air flow therethrough between the cavity and the outlet. In particular and as described in more detail below, the conduit is arranged to allow airflow therethrough from the cavity 802 to the outlet 806 as indicated by the curved arrow.

The outlet 806 in the side of the body 300 of the robot 800 may include a vent, which is indicated by the dashed line at the outlet in Fig. 8a. The outlet is arranged such that air flowing out of the cavity 802 through the outlet 806 via conduit 804 is directed towards the gripping device when the gripping device is arranged in the retracted position. In other words, the outlet 806 is arranged in a side of the body 300 that generally faces towards the retracted position of the gripping device 308 such that when the gripping device is arranged in the retracted position, air from the cavity 802 may be directed towards the gripping device. The gripping device 308 may be adapted to receive air from the outlet 806 as described in more detail below with reference to Fig. 8b.

In the particular embodiment shown in Fig. 8a, the robot 800 further comprises one or more fans 808 located within the conduit 804. The fan maybe connected to the power source 330 or may be configured to be connected (e.g., via electrical contacts) to an external power source, such as a charging station. The one or more fans are arranged to direct air in the cavity 802 towards the outlet 806 and in turn towards the gripping device 308. In some embodiments, the robot may further comprise an air inlet connected to the cavity, allowing air to flow into the cavity 802 as the fans 808 direct air out of the cavity via the outlet 806. In this way, an inlet may be used to stabilise the pressure in the cavity.

During regular operation of the robot 800 (e.g., as the robot is transporting containers in an automated storage and retrieval system), the power source 330 is used to supply power to various onboard components such as the lifting device 312, gripping device 308, motors that drive wheels 302, 303, and the like. As a result, the power source may heat up as it supplies electrical current to the various components. In addition, other electrical components such as the motors driving the wheels 302, 303 may also heat up during use. As the temperature of these components increases above ambient temperature, heat is transferred into the surrounding air in the cavity 802.

In conventional robotic container-handling vehicles, the heat generated by the power source and any other components may be dissipated in the air or through dedicated heat sinks. However, the embodiment of Fig. 8a leverages this waste heat generated by the power source for warming components of the gripping device 308 by directing air from the cavity towards the gripping device. In more detail, fan 808 is arranged to draw air from the cavity 802 and direct the air towards the outlet 806 facing the gripping device when the gripping device is in the retracted position. Heat in the air drawn from the cavity can then be transferred to components of the gripping device 308 as that air flows past or through those components.

With reference to Fig. 8b, some embodiments of the present disclosure the gripping device 308 may be adapted to receive heated air from the outlet 806. In particular, the gripping device 308 may include one or more conduits or ducts 810 that facilitate the flow of warm air from the main body 300 of the robot 800 towards any of the components of the gripping device that may require heating. As shown in Figs. 8a and 8b, some embodiments of the present disclosure relate to a gripping device 312 comprising one or more conduits 810 extending therethrough that are arranged to allow the flow of air towards one or more components, such as the gripping elements 316 of the gripping device.

In more detail and with reference to Fig. 8b, a gripping device 316 comprises a conduit 810 comprising a branch 810a directed towards a first gripping element 316a and a second branch directed towards a second gripping element 316b. The conduit 810 may comprise any number of branches or other means to facilitate the flow of air towards any number of components of the gripping device that may require warming in order to function effectively in sub-zero environments. For example, although not shown in Figs. 8a or 8b, the conduit 810 may comprise additional branches, or the gripping device may include separate conduits altogether, that are directed towards different components such as sensors 322a, 322b, or any other moving components on board the gripping device 308. In addition, the conduit 810 comprises an inlet 812 configured to receive warm air from the cavity 802 when the gripping device is in the retracted position. As shown in Fig. 8a, the inlet of the conduit 810 is arranged at a side or edge of the gripping device frame 314 such that when the gripping device is in the retracted position, the outlet 806 and inlet 812 are facing one another to allow for efficient airflow therebetween. In other embodiments, the outlet 806 of the body and the inlet 812 of the gripping device may be connected by a further conduit (not shown), such as a flexible and/or extendible hose that facilitates direct airflow therebetween even when the gripping device is not in the retracted position. In such embodiments, the fans 808 can direct air towards the gripping device components at any time whilst the gripping device is lowered into a storage column in a sub-zero environment and therefore allows for continual heating during operation of the gripping device. The conduit 310 may further comprise an additional outlet 814 to allow airflow out of the gripping device.

As described above, in use the power source 300 will produce heat as it supplies electrical current to various onboard components of the robot 800. The increase in temperature of the power source 300 leads to a transfer of heat into the surrounding air in the cavity 802. Air in the cavity 802 that has been heated by the power source can be directed to one or more components of the gripping device 308 that require warming, such as the gripping elements or sensor actuators. To do so, electrical power is supplied to the fan 808 (either by the power source 330 or by an external source, for example during charging) which draws heated air out of the cavity 802 and directs the heated air along the conduit 804, through the outlet 806 and directly into the inlet 812 of the conduit 810 of the gripping device 308. The heated air then flows through the conduit towards components (e.g., gripping elements 316, 316b) that require heating. The arrows within conduit 810 that are shown in Figs. 8a and 8b demonstrate that different portions of the airflow received at inlet 812 may flow through different branches of the conduit 810 towards different respective components. In an example, the conduit 810 may be arranged to provide a quarter of the heated air it receives to each of a total of four different gripping elements in order for the heat in the air to be transferred to the gripping elements to prevent freezing. In general, the gripping device may comprise any number of conduits or branches corresponding to the components that require heating.

In some embodiments, the one or more fans 808 may be communicatively connected to the controller 340 which controls the supply of power to the fans. In particular, in embodiments where the outlet 806 and inlet 812 are not directly connected (e.g., by a flexible or extendible hose), air can only be effectively transferred from the cavity to the gripping device when the gripping device is in the retracted position. As such, the controller may receive a signal from a sensor (e.g., sensor 322a) indicating that the gripping device is in/has reached the retracted position, after which time the controller may initiate power supply from the power source 330 to the fans 808 to supply heated air to the gripping device 308. Equally, the controller may cease power supply to the fans 808 prior to causing the lifting device to lower the gripping device (e.g., into a storage column).

In some embodiments, the gripping device may further comprise one or more temperature sensors integral with, or arranged proximate to, the one or more components of the gripping device 308 that heated air may be directed towards. The temperature sensors are communicatively coupled with the controller 340 and are configured to send signals indicating a current temperature to the controller 340. Based on the received signals, the controller may control the supply of electrical current to the fans 808. For example, if the temperature sensors indicate that the temperature of a gripping element actuating mechanism has fallen below a threshold value (e.g., zero degrees Celsius), the controller may initiate power supply to the fans 808 in order to supply heated air to the gripping elements that have fallen below the threshold value. In general, the temperature sensors may be used in a control feedback loop to control the temperature of one or more components of the gripping device 308.

In some embodiments, each branch of the conduit may be selectively shut off using a valve or using any other means suitable for preventing or restricting airflow through a conduit branch. Selective opening and closing of each branch may be controlled by the controller 340 based on signals received from temperature sensors corresponding to each branch or to the components along each branch. As such, heated air can be selectively directed to those components of the gripping device 308 which have fallen below a temperature threshold, whilst any components that remain above the temperature threshold may have their respective branches shut off in order to maximise airflow to the colder components. In general, therefore, the temperature of various components of the gripping device 308 may be individually controlled by the controlling the selective supply of heated air from the main body 300 of the robot 800.

While the system for supplying heated air has been described above in relation to a cantilever-type robot, it would be appreciated that the same systems and processes can equally be applied to cantilever-type robots, or any other robotic container-handling vehicles.

### Methods of operation

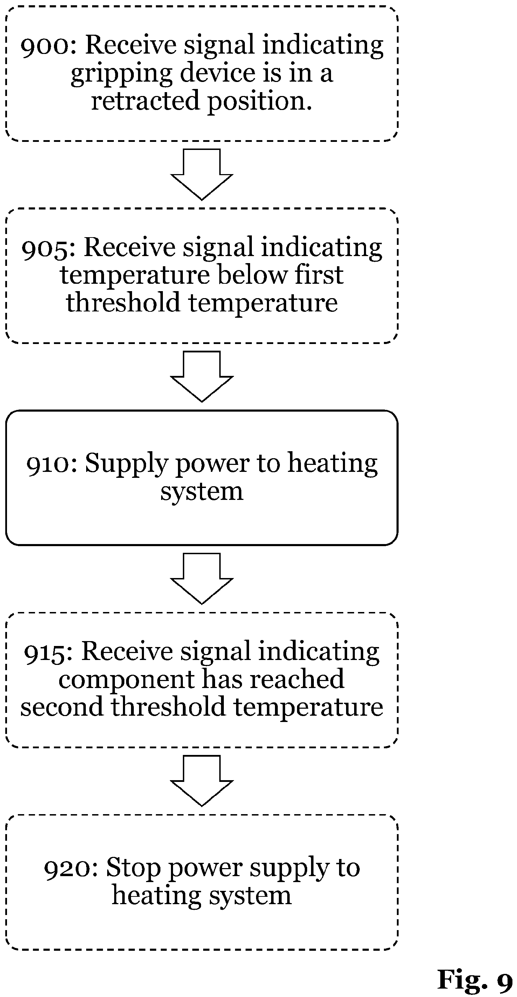

With reference to Fig. 9, a method of operating a robotic container-handling vehicle according to the embodiments disclosed herein is illustrated. The method may be performed by a controller, e.g., controller 340 of a robot. The method optionally starts with step 900 at which the controller receives one or more signals indicating that a gripping device (e.g., gripping device 308) is in a retracted position (e.g., within an internal cavity 310 of an internal cavity-type robot, or a retracted position of a cantilever-type robot. The signals received at step 900 may come from a sensor (e.g., sensor 322a) arranged to be actuated when the gripping device 308 is raised by the lifting device 312 and reaches the retracted position.

In some embodiments, the method of Fig. 9 optionally further comprises a step 905 of receiving one or more signals indicating that a temperature of one or more components of the gripping device is below a threshold value. Step 905 may be performed before, after, or instead of step 900. The signals received by the controller at step 905 are received from one or more temperature sensors arranged proximate to the one or more components of the gripping device. As described above in relation to Figs. 5a, 5b, and 6, the gripping device may have one or more temperature sensors arranged proximate to, or integral with, one or more components such as gripping elements 316 of the gripping device. The temperature sensors are communicatively coupled to the controller 340 and may be configured to periodically send signals indicating a current temperature to the controller.

If the signals indicate that the temperature of any given component of the gripping device 308 has fallen below a threshold temperature (for example, the threshold temperature may be zero degrees Celsius, one degree Celsius, 2 degrees Celsius or in general any suitable value), the method triggers controller 340 to initiate power supply to the heating system in order for those components that have fallen below the threshold temperature to be supplied with heat. In other words, at step 910, the controller causes power to be supplied to the robot's heating system (e.g., from the onboard power source 330) in order for the heating system to supply heat to those components of the gripping device. The heating system may include an electrical heating system arranged in or on the gripping device itself as described above in relation to Figs. 5a, 5b and 6, and/or may include an electrical heating system arranged within the main body 300 of the robot as described above in relation to Fig. 7, and/or may include fans that direct heated air from a cavity 802 of the robot towards the gripping device 308 as described above in relation to Figs. 8a and 8b.

At step 910, power may be supplied to the heating system from the onboard power source for a predetermined period of time, for example 1 second, 10 seconds, 30 seconds, 1 minute, 5 minutes or any longer period of time or any period of time therebetween. Alternatively, power may be supplied to the heating system until the components of the gripping device that are being heated have reached a second threshold temperature. The second threshold temperature may be the same as the threshold temperature described above in relation to step 905, although in some embodiments the second threshold temperature may be greater than the first threshold so that the components may remain above the first threshold temperature for a longer period of time. In some embodiments, the method optionally comprises a step 915 of receiving one or more further signals from the one or more temperatures indicating that the one or more components of the gripping device have reached the second threshold temperature. The threshold temperature may substantially correspond to the ambient temperature of the rest of the robot (i.e., the ambient temperature of the environment above the storage grid). Upon receiving those signals, the method may optionally proceed to step 920 at which the controller causes power supply to the heating system to stop.

The method described above may be running continually whilst the robot is in operation carrying out it's usual duties of transporting containers in an automated storage and retrieval system. In general, temperature sensors may be used to trigger and stop the supply of heat to the gripping device in order to increase efficiency and ensure the gripping device is only supplied with heat when necessary.

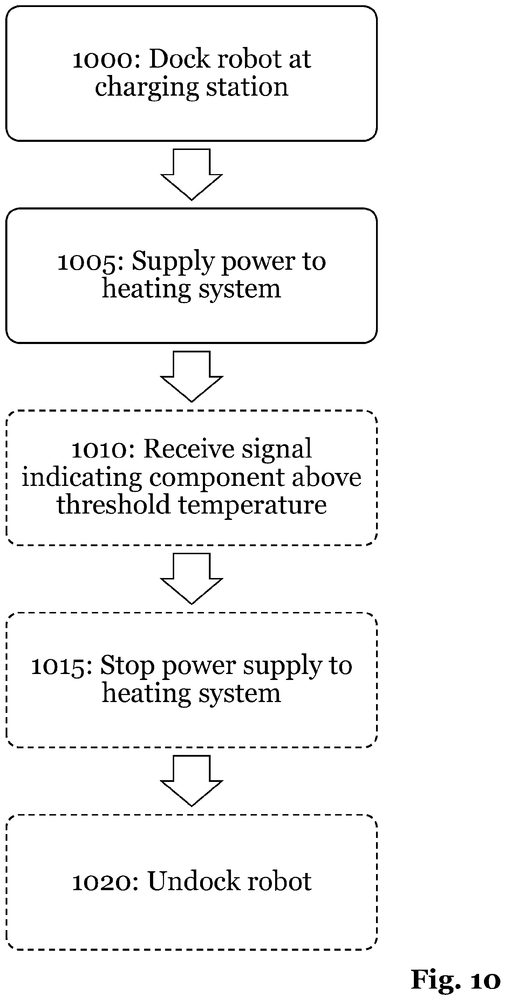

With reference to Fig. 10, a method of operating a robotic container-handling vehicle according to the embodiments disclosed herein is illustrated. The method starts with step 1000 at which a robot is docked at a charging station of an automated storage and retrieval system. Step 1000 may involve causing the robot to travel across a rail system (e.g., rail system 116) to the charging station located at the periphery of the rail system. When the robot reaches the charging station, it may be docked so that one or more electrical contacts of the robot engage one or more corresponding electrical contacts of the charging station so that the charging station can supply electrical current to the robot.

Once the robot has docked, the method proceeds to step 1005 at which power is supplied to the heating system of the robot, which may be any heating system as described above in relation to Figs. 5a - 8b. The power may be supplied to the heating system directly from an external power source located at the charging station (i.e., not the onboard power source of the robot) so that the power and ultimately the service life of the onboard power source may be preserved. In addition, supplying power directly from an external power source may allow for larger currents of voltages to be used for powering the heating system that could otherwise not be achieved with the onboard power source alone. Further still, the external power source may include an alternating current (AC) power supply that may be particularly beneficial for certain onboard heating systems, such as induction heating systems.

The method of Fig. 10 optionally further comprises steps 1010 and 1015 which may be substantially similar to steps 915 and 920 of Fig. 9. In particular, the method of Fig. 10 optionally comprises a step 915 of receiving one or more further signals from the one or more temperatures indicating that the one or more components of the gripping device have reached a threshold temperature. The threshold temperature may substantially correspond to the ambient temperature of the rest of the robot (i.e., the ambient temperature of the environment above the storage grid). Upon receiving those signals, the method may optionally proceed to step 1015 at which the controller causes power supply to the heating system to stop.

**3** Following step 1015, the method optionally further comprises a step 1020 of undocking the robot from the charging station, so that the robot can return to carrying out its intended operational duties in the automated storage and retrieval system.

Therefore, in contrast to the method of Fig. 9, the method of Fig. 10 is contrastingly carried out during charging of the power source or otherwise when the robot is docked at a charging station, rather than when the robot is carrying out its usual duties. In other words, the downtime experienced when the robot's onboard power source needs charging can be leveraged to also heat those components of the gripping device that require heating.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A gripping device for a robotic container-handling vehicle, comprising:
one or more gripping elements configured to engage a container; and
a heating system capable of supplying heat to the one or more gripping elements.

2. The gripping device of any preceding claim, wherein the one or more gripping elements comprise one or more actuators configured to cause the one or more gripping elements to move between an engaged position in which the gripping elements are configured to engage a container, and a disengaged position, and wherein the heat supply system is configured to supply heat to the one or more actuators.

3. The gripping device of claim 1 or 2, wherein the heating system comprises one or more heating elements connectable to one or more power sources for the supply of electrical current to the one or more heating elements, optionally wherein the gripping device comprises a plurality of gripping elements and a respective plurality of heating elements, wherein each heating element is arranged proximal to the respective gripping element so as to supply heat to the gripping element via one or more of conduction, convection, and radiation.

4. The gripping device of any preceding claim, wherein the heating system comprises one or more fans arranged to direct air towards the one or more gripping elements, optionally wherein the heating system further comprises one or more ducts arranged to allow airflow from a source external to the gripping device towards the one or more gripping elements, wherein the one or more fans are arranged to direct airflow along the one or more ducts.

5. The gripping device of any preceding claim, further comprising one or more sensors configured to detect when the gripping device is proximal to a container, and wherein the heating system is further configured to supply heat to at least a portion of the one or more sensors.

6. A robotic container-handling vehicle comprising a gripping device of any preceding claim.

7. The robotic container-handling vehicle of claim 6, further comprising:
a lifting device configured to lower and raise the gripping device between one or more deployed positions and a retracted position;
one or more power sources configured to supply electrical power to the lifting device and to the one or more gripping elements; and
one or more controllers configured to control operation of the lifting device, the gripping device and the heating system.

8. The robotic container-handling vehicle of claim 7, wherein the heating system comprises one or more heating elements and wherein the power source is configured to supply electrical current to the one or more heating elements.

9. The robotic container-handling vehicle of claim 7 or 8, wherein the heating system comprises one or more fans arranged to direct airflow from a region surrounding the one or more power sources towards the one or more gripping elements.

10. The robotic container-handling vehicle of any of claims 6 to 9, further comprising one or more temperature sensors arranged proximal to the one or more gripping elements and communicatively coupled to the controller, wherein the controller is configured to control the heating system based on signals received from the one or more temperature sensors.

11. The robotic container-handling vehicle of any of claims 6 to 9, wherein the heating system is configured to be connected to an external power source separate from the one or more power sources of the robotic container-handling vehicle.

12. A method for heating one or more components of a robotic container handling vehicle according to any of claims 7 to 11, the method comprising:
causing, by the controller, power to be supplied to the heating system such that heat is supplied to the one or more gripping elements of the gripping device.

13. The method of claim 12, when the power is supplied to the heating system via one or both of: the one or more power sources of the robotic container-handling vehicle, and an external power source.

14. A computer-readable medium storing instructions that, when executed by one or more processors, cause the one or more processors to carry out the method of claim 12 or 13.

15. A system comprising one or more processors and the computer-readable medium of claim 14.
